# EUROPÄISCHE PATENTSCHRIFT

(11) **EP 3 327 629 B1**
(45) Veröffentlichungstag und Bekanntmachung des Hinweises auf die Patenterteilung: **16.08.2023**
(21) Anmeldenummer: 17198999.9
(22) Anmeldetag: 27.10.2017
(51) Int. Cl.: G06V 10/75

(54) **VERFAHREN UND VORRICHTUNG ZUM DETEKTIEREN VON MEHRDEUTIGKEITEN IN EINER MATRIX EINER 2D-STRUKTUR**
METHOD AND APPARATUS FOR DETECTING AMBIGUITIES IN A MATRIX OF A 2D STRUCTURE
PROCÉDÉ ET DISPOSITIF DE DÉTECTION DE TOUTE AMBIGUÏTÉ DANS UNE MATRICE D'UNE STRUCTURE 2D

(30) Priorität: 23.11.2016 DE 102016223081; 31.03.2017 DE 102017205499
(43) Veröffentlichungstag der Anmeldung: 30.05.2018
(73) Patentinhaber: Robert Bosch GmbH, 70442 Stuttgart (DE)
(72) Erfinder: Simon, Stephan, 31079 Sibbesse (DE); Junge, Beke, 31139 Hildesheim (DE)

(56) Entgegenhaltungen:
- US-A1- 2006 147 105
- Brunelli, Roberto: "Template Matching Techniques in Computer Vision: Theory and Practice", 29. April 2009 (2009-04-29), John Wiley & Sons, XP002779625, ISBN: 0470744049 Seiten 1-4, * das ganze Dokument *
- BALLARD D H ET AL: "Computer Vision, Early Processing", 1. Januar 1982 (1982-01-01), COMPUTER VISION, PRENTICE-HALL, ENGLEWOOD CLIFFS, NJ, PAGE(S) 63 - 75, XP002516330, ISBN: 978-0-13-165316-0 * das ganze Dokument * * Seite 67, Absatz 1-2 * * Seite 67; Abbildung 3.4 * * Seite 73, Absatz 3 *
- ANONYMOUS: SPIE, PO BOX 10 BELLINGHAM WA 98227-0010 USA, 1. Januar 2009 (2009-01-01), XP040506464,

## Beschreibung

### Stand der Technik

Die vorliegende Erfindung betrifft ein Verfahren und eine Vorrichtung zum Detektieren von Mehrdeutigkeiten in einer Matrix einer 2D-Struktur. Eine 2D-Struktur kann beispielsweise ein Bild eines Sensors oder einer Kamera sein.

Bei kamerabasierten Systemen werden zur Auswertung der Bilder Matchingverfahren verwendet, beispielsweise um Bildpunkte in verschiedenen Bildausschnitten zu erkennen oder die Bewegung von Bildpunkten zu schätzen oder zu detektieren. Damit die entsprechenden Algorithmen zur Bewegungsschätzung oder von Templatematchings zuverlässig arbeiten, müssen periodische Strukturen und Kanten innerhalb von Bildern erkannt werden. Die Algorithmen müssen, wenn möglich, auf diese Strukturen angepasst werden. Um beispielsweise Zaunstrukturen innerhalb von Bildern zu erkennen, sind Verfahren bekannt, die auf einer diskreten Fouriertransformation und einer Wavelettransformation beruhen. Daneben sind weitere Verfahren bekannt, um eine Kantendetektion durchzuführen.

Die DE 10 2012 012 636 A1 beschreibt beispielsweise ein Verfahren, um innerhalb eines Quellsignals wiederholt auftretende Nutzsignalkomponenten hervorzuheben und zu detektieren. Dabei werden aus einer Mehrzahl von Quellsignalen und Nutzsignalen, für die eine Schätzung deren Abstände vorliegt, unter Bildung punktweiser Minima und lokaler Maxima und unter Berücksichtigung von Abstandswerten Wiederholungspositionen im Quellsignal bestimmt.

Die DE 41 23 983 A1 beschreibt ein iteratives Verfahren zu Extrapolation und hochauflösenden Spektralanalyse von Signalen. Hierbei erfolgt die Bearbeitung von Iterationen ausschließlich im Spektralbereich. Auf diese Weise können auch periodische Strukturen erkannt werden.

Matchingverfahren für Bilder sind weiterhin bekannt aus:
Brunelli, Roberto: "Template Matching Techniques in Computer Vision: Theory and Practice", 29. April 2009;
Ballard, DH et al:: "Computer Vision, Early Processing", 1. Januar 1982;
US 2006/147105 A1 (LEE SHIH-JONG et al), 6. Juli 2006.

### Offenbarung der Erfindung

Das erfindungsgemäße Verfahren zum automatischen Detektieren von Mehrdeutigkeiten in einer Matrix einer ersten 2D-Struktur sieht in einem ersten Schritt das Bereitstellen einer Matrix einer ersten 2D-Struktur mit mehreren Matrixelementen vor. Dies kann mittels einer ersten Verarbeitungseinheit erfolgen. Ein weiterer Schritt betrifft das Bereitstellen einer Vergleichsmatrix einer zweiten 2D-Struktur mit Vergleichsmatrixelementen, wobei die erste 2D-Struktur und die zweite 2D-Struktur gleich sein können. Das Bereitstellen der Vergleichsmatrix kann mittels einer zweiten Verarbeitungseinheit erfolgen. Es folgt ein Schritt des Vergleichens der Matrix mit der Vergleichsmatrix mittels eines Vergleichsalgorithmus, bevorzugt mittels einer Vergleichereinheit. In einem weiteren Schritt wird aus den Ergebnissen dieses Vergleichs eine Ähnlichkeitsmatrix mit Ähnlichkeitselementen gebildet. Ein weiterer Schritt sieht vor, dass die Ähnlichkeitsmatrix mittels einer Auswertefunktion entlang eines Pfades, der eine Mehrzahl von Ähnlichkeitselementen einschließt, ausgewertet wird. Das Auswerten kann in einer Auswerteeinheit erfolgen. Das Erzeugen eines Auswerteergebnisses als Maß einer in der Matrix der ersten 2D-Struktur vorhandenen Mehrdeutigkeit ist ein weiterer Schritt des Verfahrens.

Das Auswerteergebnis kann innerhalb eines Matchingsverfahrens zur Berechnung des optischen Flusses verwendet werden.

Auf diese Weise ist es möglich, mehrdeutige Bildstrukturen mit einem einfachen Algorithmus zu detektieren. Das Verfahren bietet sich deshalb vorteilhaft insbesondere für das Erkennen mehrdeutiger Strukturen wie periodische Formen oder Kanten an, wie sie bei Fahrerassistenzsystemen notwendig sind. Es ist von Vorteil, dass lediglich die Ähnlichkeitsmatrix mit ihren Ähnlichkeitselementen ausgewertet werden muss, um eine Mehrdeutigkeit in der ersten 2D-Struktur bzw. in dem Bild zu erkennen. Dies ermöglicht eine einfache und effiziente Verarbeitung. Das Verfahren kann vorteilhafterweise in ein Matchingverfahren eingebettet sein. Die Matrix aus Ähnlichkeitswerten wird in einem Matchingverfahren in der Regel ebenfalls gebildet und kann wie hier beschrieben genutzt werden. Das Verfahren hat weiterhin den Vorteil, dass es sich sehr kostengünstig in Hardware, z.B. in einem ASIC, einem FPGA oder Chip implementieren lässt. Insbesondere ist die Leistungsaufnahme einer solchen Hardware (ASIC) recht gering. Insbesondere wenn das erfindungsgemäße Verfahren Teil eines Matchingverfahrens ist, das schon in Hardware realisiert ist, ist die Leistungsaufnahme für diesen Zusatzalgorithmus sehr gering. Das Verfahren ist dann auch deutlich günstiger als die bekannten, auf Fouriertransformationen beruhenden Verfahren. Ist das Verfahren z.B. in ein Matchingverfahren eingebettet, lässt es sich im einfachsten Fall z.B. mit wenigen Additionen und Vergleichen in der Hardware, also im Chip, realisieren. Das Verfahren ermöglicht auch eine schnelle Abarbeitung einer Vielzahl von 2D-Strukturen, die Bilder eines Kamerasensors (z.B. Fahrerassistenzkamera eines Fahrerassistenzsystems) sein können, so dass etwa eine Vielzahl von Full-HD-Bildern in kürzester Zeit verarbeitet werden können, um ein Echtzeitsystem zu realisieren. Beispielsweise lassen sich mit dem erfindungsgemäßen Verfahren in dem Gesamtsystem 50 Full-HD-Bilder pro Sekunde in allen in der Praxis relevanten Fällen zuverlässig und robust verarbeiten. In der Regel ist eine Verarbeitung von 60 Full-HD-Bildern pro Sekunde und mehr zuverlässig möglich. Das Verfahren kann auch in einem Chip implementiert sein, der in einem Fahrerassistenzsystem, einem Roboter (mobil oder stationär), einem autonomen System, in einer Anlage zur industriellen Bildverarbeitung, in Überwachungssystemen oder in industriellen optischen Messsystemen verbaut sein kann.

Die Erfindung besteht in einem Verfahren gemäss Anspruch 1.

Die Unteransprüche zeigen bevorzugte Weiterbildungen der Erfindung.

Es ist vorteilhaft, wenn die erste 2D-Struktur ein Bild ist bzw. ein Bild repräsentiert, dass von einem Kamerasensor aufgenommen und bereitgestellt wird, und die Matrix einen Bildausschnitt aus der ersten 2D-Struktur bzw. aus dem Bild ist. Vorteilhafterweise ist die Vergleichsmatrix ein Vergleichsbild aus der zweiten 2D-Struktur bzw. repräsentiert ein Vergleichsbild oder einen Ausschnitt aus der zweiten 2D-Struktur. Diese zweite 2D-Struktur ist bevorzugt ebenfalls ein Bild eines Kamerasensors. Bevorzugt ist das Vergleichsbild größer oder gleich dem Bildausschnitt. Die Elemente der Matrix und der Vergleichsmatrix müssen nicht zwangsläufig auf einem rechteckigen oder quadratischen Gitter angeordnet sein. Auch eine Anordnung auf einem hexagonalen Gitter oder Ähnlichem ist möglich. Dies hängt bevorzugt von dem Bildausschnitt und dem Vergleichsbild ab. Bildausschnitt und Vergleichsbild können in beliebiger Form vorliegen, beispielsweise als Ellipse, Quadrat, in sparse-abgetasteter Form oder in nicht zusammenhängender und/oder nicht konvexer Form. Das Vergleichsbild kann bevorzugt ebenfalls ein Ausschnitt (Bildregion) aus einem Bild sein. Beispielsweise kann das Auswerteergebnis in einem Chip oder ASIC weiterverarbeitet werden, bevorzugt in einem Fahrerassistenzsystem. Das Verfahren findet bevorzugt in einem Chip oder ASIC eines Fahrerassistenzsystems Anwendung, wenn Strukturen und Mehrdeutigkeiten in Bildern erkannt werden sollen. Besonders vorteilhaft ist eine Einbettung dieses Verfahrens z.B. in ein Matchingverfahren.

Vorteilhaft weist die erste 2D-Struktur eine Mehrzahl von Strukturelementen auf. Bei einem Bild, z.B. aufgenommen von einem Sensor, einer Kamera, z.B. eines Roboters, oder von einer Fahrerassistenzkamera, kann das Strukturelement ein Pixel oder Bildpunkt sein. Für jedes Strukturelement wird ein Auswerteergebnis als Maß einer Mehrdeutigkeit erzeugt.

Ebenso ist vorteilhaft, dass das Matrixelement einen Pixel oder einen Bildpunkt in einem Bild repräsentiert. Die Position des Matrixelements stellt dann die Position eines Bildpunktes in dem Bildausschnitt dar. Der Wert des Matrixelements repräsentiert ein Merkmal des Pixels oder Bildpunktes. Ein derartiges Merkmal kann beispielsweise ein Grauwert oder ein Farbwert oder bevorzugt ein komplexer Wert sein, der auch die Umgebung eines Pixels und/oder Nachbarschaftsbeziehungen zu anderen Pixeln umfassen kann.

Es ist weiterhin vorteilhaft, wenn der Vergleichsalgorithmus auf eine Mehrzahl von Matrixelementen angewendet wird, um die Matrix mit der Vergleichsmatrix zu vergleichen. Bevorzugt werden alle Matrixelemente der Matrix bearbeitet und mit den entsprechenden Vergleichsmatrixelementen der Vergleichsmatrix verglichen. Hierdurch entsteht vorteilhafter Weise ein sehr aussagekräftiger und robuster "Vergleichswert" als Wert je eines Ähnlichkeitselements der Ähnlichkeitsmatrix. Bei Einbettung des Verfahrens in ein Matchingverfahren kann die Erstellung der Ähnlichkeitsmatrix einen Zwischenschritt des Matchingverfahrens darstellen. Als Vergleichsfunktion bzw. Vergleichsalgorithmus können beliebig dimensionale Funktionen verwendet werden. Diese Vergleichsoperation wird für alle möglichen Teilmatrizen der Vergleichsmatrix angewendet, die die Größe der Matrix aufweisen. Nach Abarbeiten aller Teilmatrizen ist die Ähnlichkeitsmatrix fertiggestellt. Besonders vorteilhaft ist es also, wenn die Ähnlichkeitsmatrix eines anderen Algorithmus (z.B. eines Matchingalgorithmus) genutzt werden kann.

Auch ist es vorteilhaft, dass das Auswerteergebnis einen Extremwert, z.B. ein Minimum, einnimmt, wenn in der Matrix keine Mehrdeutigkeiten vorhanden sind. Das Minimum wird vorzugsweise in Bezug auf einen Threshold-Wert oder vorgegebenen Bewertungswert bezogen. Vorteilhafterweise wird das Vorhandensein keiner Mehrdeutigkeit erkannt, wenn das Auswerteergebnis unterhalb eines vorgegebenen Thresholds liegt. Auch ist es möglich, eine Kante oder eine periodische Struktur zu erkennen, wenn die Auswerteergebnisse in einer bestimmten Beziehung zu einem vorgegebenen Grenzwert oder Threshold stehen.

Es ist vorteilhaft, wenn die Auswertefunktion mehrere Ähnlichkeitselemente gemäß einer vorgegebenen Nachbarschaftsbeziehung auswertet. Beispielsweise können direkt benachbarte Ähnlichkeitselemente miteinander in Beziehung gesetzt und miteinander verknüpft werden. Es ist jedoch auch möglich, Ähnlichkeitselemente auszuwerten, die voneinander beabstandet sind und zwischen denen andere Ähnlichkeitselemente angeordnet sind, die für eine Auswertung nicht berücksichtigt werden sollen. Insbesondere können also nicht nur direkte Nachbarn miteinander in Beziehung gesetzt werden. Hierdurch ergibt sich eine große Anpassungsfähigkeit des Verfahrens an die gegebenen Umstände.

Es ist ebenso vorteilhaft, wenn die Auswertefunktion eine lineare oder nichtlineare Funktion umfasst. Beispielsweise kann die Auswertefunktion in der Auswerteeinheit eine Funktion aus der Gruppe von Addition, Subtraktion, Multiplikation und Division sein. Derartige Berechnungen sind bevorzugt.

In der Erfindung werden die positiven Differenzen von direkt benachbarten Ähnlichkeitselementen für die Auswertung verwendet.

Die Summe über diese positiven Differenzen wird als Maß für die Mehrdeutigkeit herangezogen.

Die Auswertefunktion wird hierbei entlang des Pfades über mehrere Ähnlichkeitselemente angewandt. Je nach verfügbarer Rechenkapazität und Speicherkapazität sind auch kompliziertere Berechnungen zum Auswerten der Ähnlichkeitsmatrix denkbar.

Es ist vorteilhaft, wenn der Pfad, der sich über mehrere Ähnlichkeitselemente erstreckt und entlang dessen die Auswertefunktion ausgeführt wird, ein geschlossener Pfad ist. Auch in diesem Fall spielt es keine Rolle, in welcher Richtung der Pfad durchlaufen wird. Vorteilhaft ist es, wenn der Pfad in einer festgelegten Reihenfolge abgearbeitet wird. Beispielsweise kann sich der Pfad entlang aller Randelemente der Ähnlichkeitsmatrix erstrecken. Auf diese Weise lässt sich eine schnelle und wenig speicherintensive Auswertung der Matrix bzw. Ähnlichkeitsmatrix durchführen.

Vorteilhaft ist es, wenn die Ähnlichkeitsmatrix quadratisch ist. Andere Matrixformen sind denkbar. Insbesondere können die Ähnlichkeitselemente der Ähnlichkeitsmatrix auf einem Hexagonalgitter angeordnet sein. Die Form der Matrix und der Vergleichsmatrix korrespondiert in der Regel. Auch diese Matrizen können nicht nur kartesische Formen sondern auch eine Hexagonalform aufweisen. Andere Formen sind möglich. Im Bereich der Bildverarbeitung hängt die Matrix und Vergleichsmatrix und somit auch die Ähnlichkeitsmatrix von der gewählten Form des Bildausschnittes und dem Vergleichsbild ab. Diese können durchaus auch rund oder elliptisch sein oder eine andere Form aufweisen und müssen nicht notwendigerweise rechteckig oder quadratisch sein.

Weiterhin ist es vorteilhaft, wenn der Pfad, entlang dessen die Auswertefunktion ausgeführt wird, entlang des Randes der Ähnlichkeitsmatrix verläuft und nur die Ähnlichkeitselemente ausgewertet werden, die den Rand der Ähnlichkeitsmatrix bilden. Bevorzugt werden bei einer rechteckigen Ähnlichkeitsmatrix nur die Ähnlichkeitswerte der obersten und untersten Zeile sowie die der rechten und linken Spalte der Ähnlichkeitsmatrix verwendet. Es ist auch möglich, schon beim Vergleich der Matrix mit der Vergleichsmatrix nur die Ähnlichkeitselemente zu bilden, die am Rand der Ähnlichkeitsmatrix positioniert sind. Auf diese Weise lässt sich die Verarbeitung beschleunigen, Rechenzeit sparen oder die Prozessorleistung heruntersetzen.

Insgesamt ist die Auswertung der Ähnlichkeitselemente der Ähnlichkeitsmatrix sehr effizient und lässt sich kostengünstig in Hardware implementieren. Dies gilt insbesondere dann, wenn die Berechnung der Ähnlichkeitsmatrix schon als Zwischenergebnis eines anderen, bereits in Hardware implementierten Algorithmus (z.B. eines Matchingverfahrens) implementiert ist und direkt verwendet werden kann. Es ist vorteilhaft, die Mehrdeutigkeitsmaße in Wertebereiche zu quantisieren, so dass die Werte der Mehrdeutigkeitsmaße den Wertebereichen zugeordnet werden. Beispielsweise ist es möglich den Gesamtwertebereich in unterschiedliche Intervalle aufzuteilen und den jeweiligen Intervallen etwa eine Zahl [0, 1, 2, 3] zuzuweisen und zu codieren. In diesem Beispiel könnten vier Intervalle verwendet werden. Das Mehrdeutigkeitsmaß kann dann auf zwei Bit codiert werden und anschließend verwendet werden, beispielsweise in einem Matchingverfahren, in dem das Finden der Mehrdeutigkeiten eingebettet ist, um Ergebnisse zu bewerten bzw. zu verwerfen. Auf diese Weise lassen sich die Bitbreiten der Mehrdeutigkeitsmaße für eine mögliche Übertragung oder Speicherung weiter reduzieren. Die Speicherbandbreite sinkt also. Der verwendete Speicherbedarf wird reduziert. Das Verfahren wird beschleunigt.

Vorteilhaft ist es, wenn die erste 2D-Struktur und die zweite 2D-Struktur (jeweils Bilder eines Kamerasensors) skalierbar sind, wobei die Größe der Matrix und der Vergleichsmatrix bevorzugt unverändert bleiben, also nicht skaliert werden. Für jede skalierte erste 2D-Struktur wird für jedes Strukturelement - wie bei der unskalierten 2D-Struktur- durch Vergleich der Matrix mit der Vergleichsmatrix in der zweiten 2D-Struktur eine Ähnlichkeitsmatrix mit Ähnlichkeitselementen nach dem erfindungsgemäßen Verfahren gebildet. Es wird also für jede Teilmatrix der Vergleichsmatrix, die der Größe der Matrix entspricht, ein Vergleich durchgeführt. Die Ähnlichkeitselemente werden ausgewertet und zu einem Auswerteergebnis verarbeitet, um ein Maß für eine vorhandene Mehrdeutigkeit zu erzeugen, also einen Ähnlichkeitswert. Besonders vorteilhaft ist es, wenn die Ähnlichkeitswerte bzw. Ähnlichkeitsmatrix schon als Zwischenergebnis eines anderen Algorithmus vorliegt. Sie können dann vorteilhafterweise weiterverarbeitet werden, beispielsweise automatisch in einem Fahrerassistenzsystem, um z.B. aufgrund des Vorhandenseins von Mehrdeutigkeiten eventuell falsche Ergebnisse zu verwerfen. Es wird also vorteilhafterweise für jedes Strukturelement jeder skalierten erste 2D-Struktur ein Auswerteergebnis als Maß einer Mehrdeutigkeit erzeugt.

Durch die Wahl der Skalierung der ersten 2D-Struktur und zweiten 2D-Struktur können auch Mehrdeutigkeiten erkannt werden, die zunächst in der unskalierten ersten 2D-Struktur (entsprechend dem Bild) selbst nicht erkannt werden können. Bei der Bildverarbeitung, bei der die Matrix einem Bildausschnitt und die Vergleichsmatrix einer Vergleichsregion entsprechen und die erste 2D-Struktur einem Bild und die zweite 2D-Struktur einem Vergleichsbild entsprechen, können mittels skalierter (mit downsampling erzeugter) und in der Größe angepasster 2D-Strukturen Mehrdeutigkeiten erkannt werden, die sich nur durch die Skalierung aufdecken lassen. Es lassen sich unterschiedlich skalierte Mehrdeutigkeiten in den einzelnen skalierten Bildern detektieren, weiterverarbeiten und bewerten, z.B. um Ergebnisse anderer Algorithmen zu verwerfen.

Vorteilhaft ist es, wenn Mehrdeutigkeiten für das Gesamtbild (unskalierte 2D-Struktur) zu ermitteln sind, dass für die einzelnen skalierten 2D-Strukturen (Bilder) die Ergebnisse der Mehrdeutigkeitsanalyse gespeichert werden. Die Ergebnisse dieser Auswertung können weiterverarbeitet werden, beispielsweise direkt in Algorithmen eingesetzt werden, um eine Mehrdeutigkeit in dem (unskalierten) Bild zu erkennen und zu bewerten.

Es ist ebenso vorteilhaft, wenn für jede skalierte 2D-Struktur die Auswerteergebnisse als Maß einer Mehrdeutigkeit in der skalierten 2D-Struktur fusioniert werden und die fusionierten Auswerteergebnisse bewertet oder ausgewertet werden, um ein Fusionsmaß einer Mehrdeutigkeit für eine beliebig skalierte oder bevorzugt die unskalierte 2D-Struktur zu bilden. Im Bereich der Bildverarbeitung können durch die skalierten Bilder und die dort ermittelten Mehrdeutigkeiten schließlich Mehrdeutigkeiten in einem Gesamtbild ermittelt werden. Die Ergebnisse der einzelnen skalierten Bilder werden auf eine gemeinsame Auflösung gebracht, bevorzugt mittels Upsampling, indem beispielsweise für jeden Bildpunkt beispielsweise die maximal vorhandene Summe der positiven Randdifferenzen der Ähnlichkeitselemente aller skalierten Bilder verwendet wird. Andere Fusionsstrategien, die auch entlang anderer Pfade eine Auswertung vorsehen, sind denkbar. Durch das Fusionieren der Auswerteergebnisse lässt sich für jedes Pixel eines Bildes beispielsweise das maximale Mehrdeutigkeitsmaß aller skalierten ersten 2D-Strukturen ermitteln.

Vorteilhaft ist es eine Mehrzahl von skalierten ersten 2D-Strukturen für die Auswertung zu verwenden, um die Zahl der detektierbaren Mehrdeutigkeiten zu erhöhen. Das Ergebnis kann in anschließenden Algorithmen weiterverwendet werden. Ist das beschriebene Verfahren z.B. in einem Matchingverfahren eingebettet, so ist es sinnvoll, die Mehrdeutigkeitsmaße auch in dem Matchingverfahren zu verwenden, etwa als Information, wie sicher einige Ergebnisse sein können. Es lässt sich auch derart auswerten, dass durch einzelne Mehrdeutigkeitswerte Ergebnisse anderer Algorithmen bewertet oder verworfen werden. In Bildern ist es beispielsweise möglich, Mehrdeutigkeiten zu detektieren, die sich aus dem einzelnen nicht skalierten Bild nicht ohne weiteres detektieren lassen.

Eine Vorrichtung zum automatischen Detektieren von Mehrdeutigkeiten in einer Matrix, die eine erste Verarbeitungseinheit zum Bereitstellen einer Matrix aus einer ersten 2D-Struktur aus Sensordaten eines Sensors und eine zweite Verarbeitungseinheit zum Bereitstellen einer Vergleichsmatrix umfasst und die eine Vergleichereinheit mit Vergleichsalgorithmus zum Vergleichen und Bilden einer Ähnlichkeitsmatrix aufweist sowie eine Auswerteeinheit zum Ausführen einer Auswertefunktion entlang eines Pfades, der eine Mehrzahl von Ähnlichkeitselementen der Ähnlichkeitsmatrix einschließt, und die zum Erzeugen eines Auswerteergebnisses als Maß einer in der Matrix vorhandenen Mehrdeutigkeit dient, ist vorteilhaft und eignet sich zum Ausführen des erfindungsgemäßen Verfahrens. Insbesondere eine Vorrichtung, die dazu eingerichtet ist, das erfindungsgemäße Verfahren auszuführen, ist vorteilhaft und weist alle Vorteile des Verfahrens auf. Eine derartige Vorrichtung lässt sich beispielsweise in einem Embedded System oder in einem Chip, etwa in einem ASIC oder FPGA, implementieren und ermöglicht somit eine schnelle Verarbeitung einer Vielzahl von Matrizen bei einer geringen Gesamtleistungsaufnahme. Der Chip oder der ASIC kann ein Bestandteil eines optischen, insbesondere kamerabasierten Systems, Sensors oder Sensorsystems sein. Derartige ASICs oder Sensoren können beispielsweise in Fahrerassistenzkameras, in Fahrerassistenzsystemen, autonomen Systemen, optischen Überwachungssystemen, Robotern oder bei Systemen der industriellen Bildverarbeitung eingesetzt und verwendet werden. Der erfindungsgemäße Chip, ASIC oder Sensor weist gegenüber den bekannten Chips eine deutlich reduzierte Leistungsaufnahme auf, insbesondere wenn das oben beschriebene Verfahren bzw. der oben beschriebene Algorithmus implementiert ist. Wird das oben beschriebene Verfahren in ein Matchingverfahren eingebettet, z.B. in einem Templatematching oder zur Berechnung eines optischen Flusses, so weist der Algorithmus zum Detektieren von Mehrdeutigkeiten, der auf einem Chip implementiert ist, eine deutlich reduzierte Leistungsaufnahme auf, da im einfachsten Fall z.B. nur wenige Additionen (eventuell in Kombination mit wenigen Vergleichen) im Chip zusätzlich notwendig sind.

Vorteilhafterweise sind die erste Verarbeitungseinheit und/oder die zweite Verarbeitungseinheit und/oder die Vergleichereinheit und/oder die Auswerteeinheit in einem ASIC oder Chip implementiert. Dies kann z.B. bei der Implementierung in einem Matchingverfahren vorgesehen sein. Die Einheiten und/oder der ASIC bzw. Chip sind vorteilhafterweise Teil eines Fahrerassistenzsystems, eines (mobilen) Roboters, eines Überwachungssystems oder eines industriellen Bildverarbeitungssystems. Sie können beispielsweise auch in eine Kamera oder Fahrerassistenzkamera integriert sein.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: Ein Ablaufschema des Verfahrens;
- Figur 2: eine Prinzipskizze der erfindungsgemäßen Vorrichtung;
- Figuren 3a - 3c: ein Prinzipbild zur Erläuterung des Verfahrensablaufs für drei unterschiedliche Matrizen.

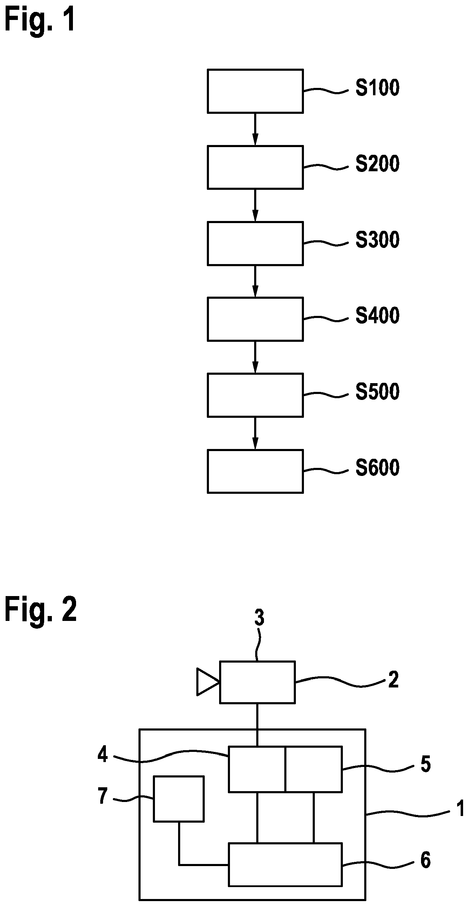

Figur 1 zeigt den prinzipiellen Verfahrensablauf des Verfahrens zur automatischen Detektion von Mehrdeutigkeiten in einer Matrix einer ersten 2D-Struktur. Das Verfahren kann beispielsweise in einem ASIC, Chip oder FPGA implementiert sein, der in einem Fahrerassistenzsystem verbaut sein kann. Das Verfahren umfasst einen ersten Schritt S 100, in dem eine Matrix einer ersten 2D-Struktur, die ein Bild darstellen und auf Sensordaten eines Kamerasensors beruhen kann, bereitgestellt wird. Die Matrix kann eine Mehrzahl von Matrixelementen haben. Das Bereitstellen erfolgt in einer ersten Verarbeitungseinheit.

In einem Schritt S 200 wird in einer zweiten Verarbeitungseinheit eine Vergleichsmatrix mit Vergleichsmatrixelementen bereitgestellt. Im Falle einer Bildverarbeitung entspricht die Matrix einem Bildausschnitt eines Bildes (2D-Struktur) und die Vergleichsmatrix einem Vergleichsbild. Dieses Vergleichsbild kann eine Bildregion aus demselben Bild zu einem anderen Zeitpunkt, oder aus einem anderen Bild oder aus vielen anderen Bildern sein.

Die Matrix und Vergleichsmatrix können aus Sensordaten eines Sensors gewonnen werden.

Nach einem Schritt S 300 wird mittels eines Vergleichsalgorithmus in einer Vergleichereinheit ein Vergleich der Matrix mit der Vergleichsmatrix durchgeführt. Die Vergleichsfunktion kann auf Verarbeitungsschritte angepasst sein. Der Vergleich der Matrix mit der Vergleichsmatrix kann beispielsweise für jedes Matrixelement erfolgen. Eine mögliche Vergleichsfunktion oder Vergleichsalgorithmus könnte eine Hamming-Distanzfunktion sein, die beispielsweise matrixelementweise Distanzen von zum Beispiel binären Deskriptoren auf skalare Ähnlichkeiten abbildet. Diese Ähnlichkeiten werden teilweise als Hamming-Kosten bezeichnet. Diese Schritte S 100 bis S 300 können beispielsweise auch Teil eines Matchingverfahrens sein.

In einem Schritt S 400 wird aus den Ergebnissen des Vergleichs eine Ähnlichkeitsmatrix mit Ähnlichkeitselementen gebildet. Bevorzugt wird für jedes Matrixelement oder für jede Teilmatrix der Vergleichsmatrix, die der Größe der Matrix entspricht, ein Ähnlichkeitselement gebildet. In einem weiteren Schritt S 500 erfolgt in einer Auswerteeinheit ein Auswerten der Ähnlichkeitsmatrix mittels einer Auswertefunktion entlang eines Pfades, der eine Mehrzahl von Ähnlichkeitselementen einschließt. Ein Schritt S 600 sieht das Erzeugen eines Auswerteergebnisses vor. Das Auswerteergebnis kann ein Maß für eine in der Matrix der ersten 2D-Struktur vorhandene Mehrdeutigkeit sein.

Figur 2 zeigt die erfindungsgemäße Vorrichtung 1 zum Detektieren von Mehrdeutigkeiten in einer Matrix. Die Vorrichtung 1 ist mit einem Kamerasensor 2 verbunden, der Sensordaten erzeugt und an die Vorrichtung 1 übermittelt. Die Vorrichtung 1 kann beispielsweise ein Chip oder ASIC in einem Roboter oder in einem Fahrassistenzsystem sein. Der Kamerasensor 2 kann beispielsweise eine Kamera 3 oder eine Fahrassistenzkamera sein oder darin integriert sein.

Eine Verarbeitungseinheit 4 der Vorrichtung 1 wertet die Sensordaten aus dem Kamerasensor 2 aus und stellt die aufbereiteten und ausgewerteten Sensordaten in Form einer Matrix einer ersten 2D-Struktur (Bild) zur Verfügung. Die Matrix entspricht einem Bildausschnitt eines von der Kamera 3 aufgenommenen Bildes, was die erste 2D-Struktur ist. Eine zweite Verarbeitungseinheit 5 stellt eine Vergleichsmatrix einer zweiten 2D-Struktur zur Verfügung. Diese kann beispielsweise ebenfalls aus den Sensordaten des Kamerasensors 2 gewonnen werden. Im Falle einer Kamera 3 kann die Vergleichsmatrix einer Bildregion entsprechen, ermittelt zu einem anderen Zeitpunkt als das Bild.

Eine Vergleichereinheit 6 der Vorrichtung 1 weist einen Vergleichsalgorithmus auf, der die Vergleichsmatrix und die Matrix vergleicht und eine Ähnlichkeitsmatrix bildet. Eine Auswerteeinheit 7 führt eine Auswertefunktion entlang eines Pfades aus. Der Pfad für die Auswertefunktion umfasst eine Mehrzahl von Ähnlichkeitselementen der Ähnlichkeitsmatrix. Die Auswerteeinheit 7 erzeugt ein Auswerteergebnis aus der Auswertung. Das Auswerteergebnis ist ein Maß für eine Mehrdeutigkeit, die in der Matrix vorhanden ist. Die Vorrichtung 1 kann beispielsweise ein Chip, ein ASIC oder ein Embedded System sein. Die Verarbeitungseinheiten 4 und 5 sowie die Vergleichereinheit 6 und die Auswerteeinheit 7 können Module oder Bereiche innerhalb des ASIC sein.

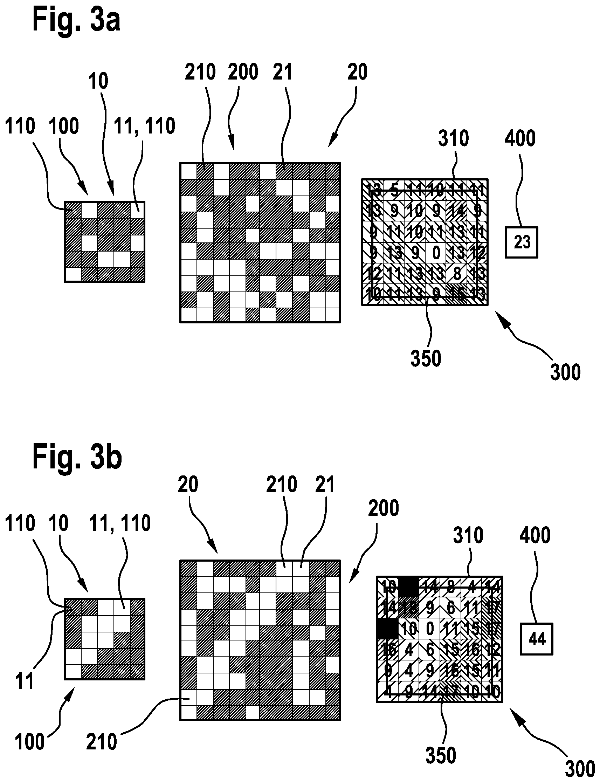

Die Figuren 3a bis 3c zeigen ein Ausführungsbeispiel, in dem jeweils eine Matrix 100, die einen Bildausschnitt 10 eines ersten Bildes oder einer ersten 2D-Struktur repräsentiert, mit einer Vergleichsmatrix 200, die ein Vergleichsbild 20 repräsentiert, verglichen wird. Das Vergleichsbild 20 ist eine Bildregion eines zweiten Bildes oder zweiten 2D-Struktur, wobei das erste Bild und das zweite Bild gleich sein können. Die Matrix 100 umfasst mehrere Matrixelemente 110, die einem Bildpunkt 11 entsprechen. Die Vergleichsmatrix 200 hat eine Mehrzahl von Vergleichsmatrixelementen 210, die Bildpunkten 21 eines Vergleichsbilds 20 entsprechen.

In der gezeigten Ausführungsform sind der zu vergleichende Bildausschnitt 10 und das Vergleichsbild 20 jeweils bildpunktweise bzw. pixelweise mit einem Feature transformiert. Im vorliegenden Fall ist das Feature ein binärer Deskriptor. Die Form des Bildausschnitts 10 und des Vergleichsbilds 20 sind hier quadratisch angenommen. Sie können jedoch auch andere zweidimensionale Formen annehmen.

Der Bildausschnitt 10, entsprechend der Matrix 100 wird pixelweise mit dem Vergleichsbild 20 über eine Vergleichsfunktion miteinander verglichen. Im hier gezeigten Beispiel ist die Vergleichsfunktion eine Hamming-Distanzfunktion, die pixelweise die Distanzen der binären Deskriptoren auf skalare Ähnlichkeitswerte abbilden. Diese skalaren Ähnlichkeitswerte werden auch Hamming-Kosten genannt. Die Ähnlichkeitswerte werden über den Bildausschnitt 10 aufsummiert und in einer Ähnlichkeitsmatrix 300 mit Ähnlichkeitselementen 310 gespeichert. Das Optimum der Ähnlichkeitsmatrix 300 ist im hier beschriebenen Fall ein Minimum.

Bei der hier verwendeten (nicht notwendigerweise) quadratischen zweidimensionalen Matrix 100 und Vergleichsmatrix 200 entsteht eine zweidimensionale quadratische Ähnlichkeitsmatrix 300. Ist die Größe der Matrix 100 gleich n x n und die Größe der Vergleichsmatrix 200 m x m mit n > m, so hat die Ähnlichkeitsmatrix 300 die Größe (m-(n-1)) x (m-(n-1)). Im Rahmen der Erfindung hat sich gezeigt, dass die Mehrdeutigkeiten, die sowohl in dem Bildausschnitt als auch in dem Vergleichsbildausschnitt enthalten sind, auch aus der Ähnlichkeitsmatrix 300 herausgelesen werden können. Es zeigt sich, dass die skalaren Werte der Ähnlichkeitselemente 310 (im Folgenden auch Ähnlichkeitswerte genannt) sehr unterschiedlich verteilt sind, in Abhängigkeit von der Matrix 100 und der Vergleichsmatrix 200. Die hier gezeigten Beispiele gemäß den Figuren 3a bis 3c gehen von einem Schwarz-weiß-Bild aus, wobei ein schwarzer Bildpunkt 11, also ein schwarzes Matrixelement 110, einem Wert 0 entspricht, wohingegen ein weißer Bildpunkt 11 dem Wert 1 entspricht. Die hier gezeigte Matrix 100 hat die Größe von 5 x 5 Matrixelementen 110, die Vergleichsmatrix 200 die Größe von 10 x 10 Vergleichsmatrixelementen 210. Somit hat die Ähnlichkeitsmatrix 300 die Größe von 6 x 6 Ähnlichkeitsmatrixelementen 310. Die Vergleichsfunktion bildet die Summe der absoluten Werte der pixelweisen Differenzen der Matrix 100 (entsprechend dem Bildausschnitt 10) und der Vergleichsmatrix 200 (entsprechend dem Vergleichsbild 20). Die Vergleichsfunktion arbeitet direkt auf den Schwarz-weiß-Werten.

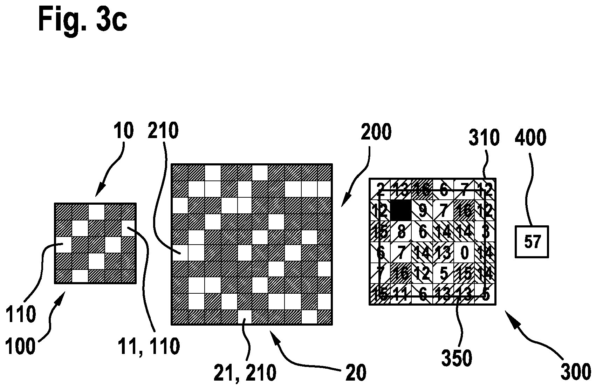

Figur 3a zeigt einen Fall mit einem Zufallsmuster im Bildausschnitt 10. Figur 3b zeigt den Fall einer Kante im Bildausschnitt 10, während Figur 3c den dritten Fall einer periodischen Struktur in Bildausschnitt 10 darstellt. Die Bildausschnitte 10 der jeweiligen Figuren 3a bis 3c sind in den Vergleichsbildern 20 jeweils zu finden. Der Bildausschnitt 10 wird mit allen Ausschnitten der gleichen Größe in dem Vergleichsbild 20 mit der Vergleichsfunktion, hier eine Hamming-Distanzfunktion, verglichen. Dazu wird der 5 x 5 Bildpunkte umfassende Bildausschnitt 10 beispielsweise zunächst in die linke obere Ecke des Vergleichsbilds 20 gelegt, so dass alle Bildpunkte des Bildausschnitts 10 über Vergleichsbild 20 liegen. Eine Randbehandlung wird in dem gezeigten Beispiel nicht vorgenommen, wäre aber möglich. Es werden dann die absoluten Differenzen der übereinandergelegten Bildpunkte berechnet und aufsummiert. Dieser Wert ist der erste Ähnlichkeitswert, also der Wert des ersten Ähnlichkeitselements 310 der Ähnlichkeitsmatrix 300. Er wird dem Ähnlichkeitselement 310 in der linken oberen Ecke der Ähnlichkeitsmatrix 300 zugeschrieben.

Im nächsten Schritt wird nun der Bildausschnitt 10 um einen Bildpunkt nach rechts verschoben. Es erfolgt also bevorzugt eine sequentielle Bearbeitung. Es wird nun erneut die Summe der absoluten Differenzen der übereinandergelegten Bildausschnitte berechnet und ein Ähnlichkeitswert ermittelt, der einem weiteren Ähnlichkeitselement 310 zugewiesen wird. Die Schritte werden so lange wiederholt, bis alle Vergleiche mit dem Vergleichsausschnitt 20 abgearbeitet sind. Dabei kann eine zeilenweise Ausführung des Verfahrens erfolgen. Schließlich wurde der Bildausschnitt 10 in allen 36 möglichen Positionen des Vergleichsbilds 20 positioniert und mit der entsprechenden Region des Vergleichsbilds 20 verglichen. Die Ähnlichkeitsmatrix 300 ist dann komplett gefüllt, so dass für jedes der 36 Ähnlichkeitselemente 310 ein skalarer Ähnlichkeitswert ermittelt wurde. Es ist durchaus möglich, dass diese Schritte Teil eines Matchingverfahrens sein können. Es ergeben sich dann für die drei Fälle in den Figuren 3a bis 3c die jeweiligen Ähnlichkeitsmatrizen 300.

Beim Vergleich der Matrix 100 mit der Vergleichsmatrix 200 zeigt sich, dass im Falle eines Bildausschnittes 10, der in dem Vergleichsbild 20 eindeutig ist und keine ähnlichen Strukturen aufweist, sich in der Ähnlichkeitsmatrix 300 für das entsprechende Ähnlichkeitselement 310 ein minimaler Wert ergibt. Die Ähnlichkeitswerte um dieses Minimum herum steigen an, bis sie auf einem relativ konstanten Niveau sind. Dies ist in Figur 3a anhand der Ähnlichkeitsmatrix 300 zu erkennen.

Gemäß Figur 3b, in der eine Kante in dem Bildausschnitt 10 vorhanden ist, sind die Ähnlichkeitswerte entlang der Kante relativ identisch. Es bilden sich mehrere sehr ähnliche Minima heraus, während die Ähnlichkeitswerte orthogonal zur Kante relativ schnell ansteigen.

Ist in dem zu vergleichenden Bildausschnitt 10 eine periodische Struktur vorhanden, wie in Bild 3c dargestellt, so bildet sich eine Ähnlichkeitsmatrix mit Ähnlichkeitselementen mit sehr unterschiedlichen Werten aus. Je nach Periode der Struktur in dem Bildausschnitt 10 wechseln sich hohe Werte und sehr niedrige Werte für die Ähnlichkeitselemente 310 ab.

Anschließend erfolgt eine Auswertung der Ähnlichkeitsmatrix 300 entlang eines Pfades 350. Der Pfad 350 schließt eine Mehrzahl von Ähnlichkeitselementen 310 ein. In der hier gezeigten Ausführungsform schließt der Pfad 350 alle am Rand liegenden Ähnlichkeitselemente 310 ein. Eine Auswertefunktion berechnet in diesem Fall die positiven Differenzen von benachbarten Ähnlichkeitselementen 310 und summiert diese auf. Andere Berechnungsvorschriften oder Auswertefunktionen sind selbstverständlich möglich. Die hierdurch gebildete Summe ist ein Maß der in der Matrix 100 bzw. in dem Bildausschnitt 10 vorhandenen Mehrdeutigkeit. Im vorliegenden Fall ist das Maß 400 eine skalare Größe.

Vergleicht man die Bildausschnitte 10 gemäß den Figuren 3a bis 3c, so zeigt sich, dass der kleinste Wert des Auswerteergebnisses, also das kleinste Maß 400 den Fall eines Zufallsmusters widerspiegelt. Der höchste Wert im Fall der Figur 3c weist auf eine periodische Struktur hin. Eine im Bildausschnitt 10 vorhandene Kante gemäß Figur 3b hat einen mittleren Wert für das Maß 400. Je nach Anwendungsfall kann also durch Vorgabe eines Grenzwerts oder Thresholds eine entsprechende periodische Struktur oder Kante in einem Bild erkannt werden. Diese Informationen können beispielsweise in anderen Algorithmen verwendet werden. Ist das Verfahren z.B. Bestandteil eines Matchingverfahrens, so könnten z.B. die Ergebnisse dieses Matchingverfahrens bewertet oder sogar aufgrund der Mehrdeutigkeitsinformation verworfen werden.

Handelt es sich bei dem durchgeführten Matchingverfahren z.B. um eine Bestimmung des optischen Flusses, so enthalten beispielsweise die im Schritt S400 gemäß Figur 1 gebildeten Ähnlichkeitselemente 310 der Ähnlichkeitsmatrix 300 Informationen zum optischen Fluss zwischen einer Featuretransformation eines ersten Kamerabildes bzw. der Matrix 100 und einer Featuretransformation eines zweiten Kamerabildes bzw. der Vergleichsmatrix 200. Im Schritt S500 wird die Information des optischen Flusses der Ähnlichkeitsmatrix 300 mittels einer Auswertefunktion entlang eines Pfades, der eine Mehrzahl von Ähnlichkeitselementen 310 einschließt, ausgewertet. Danach wird ein Auswerteergebnis als Maß einer in der Matrix 100 der ersten 2D-Struktur vorhandenen Mehrdeutigkeit im Schritt S600 erzeugt. Das Auswerteergebnis wird demnach in Abhängigkeit der Ähnlichkeitsmatrix 300 bzw. der optischen Flussmatrix erzeugt. Wenn das Auswerteergebnis zu einer Koordinate bzw. einem Bereich als Mehrdeutigkeitsmaß auf eine Periode oder eine Kante in dem ersten Kamerabild bzw. der Matrix 100 hinweist, so kann beispielsweise in einem zusätzlichen optionalen Verfahrensschritt der optische Flussvektor der Ähnlichkeitsmatrix 300 zu diesen Koordinaten bzw. in diesem Bereich verworfen werden, um eventuell falsche Flussvektoren im Endergebnis zu vermeiden, welche an mehrdeutigen Bildstrukturen entstehen können. Der Vorteil des erfindungsgemäßen Verfahrens darin besteht, dass das Auswerteergebnis in Abhängigkeit des Ergebnisses des Matchingverfahrens bzw. des optischen Flusses erzeugt werden kann und somit der Rechenaufwand zur Bewertung des Matchingverfahrens reduziert wird.

## Patentansprüche

1. Verfahren zum automatischen Detektieren von Mehrdeutigkeiten in einer Matrix einer ersten 2D-Struktur für ein Matchingverfahren zur Bestimmung des optischen Flusses, um die Bewegung von Bildpunkten zu schätzen oder zu detektieren, umfassend die folgenden Schritte:
- Bereitstellen (S100) einer Matrix (100) einer ersten 2D-Struktur mit Matrixelementen (110) mittels einer ersten Verarbeitungseinheit (4), wobei die erste 2D-Struktur ein Bild ist, das von einem Kamerasensor (2) bereitgestellt wird, und die Matrix (100) ein Bildausschnitt (10) aus der ersten 2D-Struktur ist, wobei das Matrixelement (110) einem Pixel und seiner Position in einem Bildausschnitt (10) entspricht und der Wert des Matrixelements (110) ein Merkmal des Pixels repräsentiert, wobei ein derartiges Merkmal ein Grauwert oder ein Farbwert oder ein komplexer Wert ist, der die Umgebung eines Pixels und/oder Nachbarschaftsbeziehungen zu anderen Pixeln umfassen kann;
- Bereitstellen (S200) einer Vergleichsmatrix (200) einer zweiten 2D-Struktur mit Vergleichsmatrixelementen (210) mittels einer zweiten Verarbeitungseinheit (5), wobei die Vergleichsmatrix (200) ein Vergleichsbild (20) aus der zweiten 2D-Struktur ist, wobei diese zweite 2D-Struktur ebenfalls ein Bild des Kamerasensors (2) ist, und das Vergleichsbild größer oder gleich dem Bildausschnitt (10) ist, wobei die Vergleichsmatrix (200) einer Bildregion entspricht, ermittelt zu einem anderen Zeitpunkt als das Bild der ersten 2D-Struktur,
- Vergleichen (S300) der Matrix (100) mit der Vergleichsmatrix (200) mittels eines Vergleichsalgorithmus in einer Vergleichereinheit (6); wobei der zu vergleichende Bildausschnitt (10) und das Vergleichsbild (20) jeweils pixelweise mit einem binären Deskriptor transformiert werden, wobei der Vergleichsalgorithmus eine Hamming-Distanzfunktion ist, die pixelweise die Distanzen der binären Deskriptoren auf skalare Ähnlichkeitswerte abbildet, wobei die Schritte (S100 bis S 300) Teil des Matchingverfahrens sind, und
- Bilden (S400) einer Ähnlichkeitsmatrix (300) mit Ähnlichkeitselementen (310) aus den Ergebnissen des Vergleichs; wobei die Ähnlichkeitswerte über den Bildausschnitt (10) aufsummiert und in der Ähnlichkeitsmatrix (300) mit Ähnlichkeitselementen (310) gespeichert werden, wobei die Ähnlichkeitsmatrix (300) einen Zwischenschritt des Matchingverfahrens darstellt,
- Auswerten (S500) der Ähnlichkeitsmatrix (300) in einer Auswerteeinheit (7) mittels einer Auswertefunktion entlang eines Pfades, der eine Mehrzahl von Ähnlichkeitselementen (310) einschließt, wobei die Auswertefunktion die positiven Differenzen von benachbarten Ähnlichkeitselementen (310) berechnet und diese aufsummiert, wobei die hierdurch gebildete Summe ein Maß (400) der in der Matrix (100) vorhandenen Mehrdeutigkeit ist, und
- Erzeugen (S600) eines Auswerteergebnisses als Maß einer in der Matrix (100) der ersten 2D-Struktur vorhandenen Mehrdeutigkeit, wobei, wenn das Auswerteergebnis zu einem Bereich als Mehrdeutigkeitsmaß auf eine Periode oder eine Kante in dem ersten Kamerabild beziehungsweise der Matrix (100) hinweist, der optische Flussvektor in diesem Bereich verworfen wird.

2. Verfahren gemäß Anspruch 1, **dadurch gekennzeichnet, dass** der Vergleichsalgorithmus auf eine Mehrzahl von Matrixelementen (110) angewendet wird, um die Matrix (100) mit der Vergleichsmatrix (200) zu vergleichen.

3. Verfahren gemäß einem der vorhergehenden Ansprüche, **dadurch gekennzeichnet, dass** das Auswerteergebnis einen Extremwert einnimmt, wenn in der Matrix (100) keine Mehrdeutigkeiten vorhanden sind.

4. Verfahren gemäß einem der vorhergehenden Ansprüche, **dadurch gekennzeichnet, dass** der Pfad über mehrere Ähnlichkeitselemente (310), entlang dessen die Auswertefunktion ausgeführt wird, ein geschlossener Pfad ist.

5. Verfahren gemäß einem der vorhergehenden Ansprüche, **dadurch gekennzeichnet, dass** die Ähnlichkeitsmatrix (300) quadratisch ist.

6. Verfahren gemäß einem der vorhergehenden Ansprüche, **dadurch gekennzeichnet, dass** der Pfad entlang des Rands der Ähnlichkeitsmatrix (300) verläuft und nur die Ähnlichkeitselemente (310) gebildet werden, die den Rand der Ähnlichkeitsmatrix (300) abbilden, bevorzugt nur die Ähnlichkeitswerte (310) in der obersten und untersten Zeile der Ähnlichkeitsmatrix (300) und in der rechten und linken Spalte der Ähnlichkeitsmatrix (300) verwendet werden.

7. Verfahren gemäß einem der vorhergehenden Ansprüche, **dadurch gekennzeichnet, dass** das Auswerteergebnis der Ähnlichkeitsmatrix (300) in Wertebereiche quantisiert wird, so dass die Werte des Auswerteergebnisses den Wertebereichen zugeordnet werden und die Wertebereiche einem Maß der Mehrdeutigkeit zugeordnet sind.

8. Verfahren gemäß einem der vorhergehenden Ansprüche, **dadurch gekennzeichnet, dass** die erste 2D-Struktur und die zweite 2D-Struktur skalierbar sind und für jede skalierte erste und zweite 2D-Struktur für jedes Strukturelement der ersten 2D-Struktur die Matrix (100) und Vergleichsmatrix (200) verglichen und eine Ähnlichkeitsmatrix (300) mit Ähnlichkeitselementen (310) erstellt und ausgewertet wird und jeweils ein Auswerteergebnis erzeugt wird, um ein Maß einer Mehrdeutigkeit für jede skalierte erste 2D-Struktur zu erstellen.

9. Verfahren gemäß dem vorherigen Anspruch, **dadurch gekennzeichnet, dass** die Auswerteergebnisse als Maß einer Mehrdeutigkeit für jede skalierte erste 2D-Struktur fusioniert werden und die fusionierten Auswerteergebnisse bewertet oder ausgewertet werden, um ein Fusionsmaß einer Mehrdeutigkeit für die unskalierte erste 2D-Struktur oder für eine skalierte erste 2D-Struktur zu bilden und um eine Weiterverarbeitung des Fusionsmaßes zu ermöglichen.

10. Vorrichtung zum Detektieren von Mehrdeutigkeiten in einer Matrix (100), insbesondere ein Chip oder ASIC, umfassend
eine erste Verarbeitungseinheit (4) zum Bereitstellen einer Matrix (100) aus einer ersten 2D-Struktur aus Sensordaten eines Kamerasensors (2);
eine zweite Verarbeitungseinheit (5) zum Bereitstellen einer Vergleichsmatrix (200) einer zweiten 2D-Struktur aus Sensordaten eines Kamerasensors;
eine Vergleichereinheit (6) mit Vergleichsalgorithmus zum Vergleichen und Bilden einer Ähnlichkeitsmatrix (300);
**gekennzeichnet durch**
eine Auswerteeinheit (7) zum Ausführen einer Auswertefunktion entlang eines Pfades, der eine Mehrzahl von Ähnlichkeitselementen (310) der Ähnlichkeitsmatrix (300) einschließt und zum Erzeugen eines Auswerteergebnisses als Maß einer in der ersten 2D-Struktur vorhandenen Mehrdeutigkeit, wobei
die Vorrichtung dazu eingerichtet ist, ein Verfahren gemäß einem der vorhergehenden Ansprüche 1 bis **Fehler! Verweisquelle konnte nicht gefunden werden.** auszuführen, und
die erste Verarbeitungseinheit (4) und/oder die zweite Verarbeitungseinheit (5) und/oder die Vergleichereinheit (6) und/oder die Auswerteeinheit (7) in einem Chip oder ASIC implementiert ist, und
die erste 2D-Struktur ein Bild ist und die zweite 2D-Struktur ein Bild ist, aus dem ein Vergleichsbild ermittelt wird.

## Claims

1. Method for automatically detecting ambiguities in a matrix of a first 2D structure for a matching method for determining the optical flow in order to estimate or to detect the motion of pixels, comprising the following steps:
- providing (S100) a matrix (100) of a first 2D structure having matrix elements (110) by means of a first processing unit (4), wherein the first 2D structure is an image provided by a camera sensor (2), and the matrix (100) is an image excerpt (10) from the first 2D structure, wherein the matrix element (110) corresponds to a pixel and its position in an image excerpt (10) and the value of the matrix element (110) represents a feature of the pixel, wherein such a feature is a grey scale value or a colour value or a complex value that can comprise the surroundings of a pixel and/or neighbourhood relationships with other pixels;
- providing (S200) a comparison matrix (200) of a second 2D structure having comparison matrix elements (210) by means of a second processing unit (5), wherein the comparison matrix (200) is a comparison image (20) from the second 2D structure, wherein said second 2D structure is likewise an image from the camera sensor (2), and the comparison image is larger than or equal to the image excerpt (10), wherein the comparison matrix (200) corresponds to an image region, determined at a time different from that pertaining to the image of the first 2D structure,
- comparing (S300) the matrix (100) with the comparison matrix (200) by means of a comparison algorithm in a comparator unit (6); wherein the image excerpt (10) to be compared and the comparison image (20) are each transformed pixel by pixel with a binary descriptor, wherein the comparison algorithm is a Hamming distance function which pixel by pixel maps the distances of the binary descriptors to scalar similarity values, wherein the steps (S100 to S300) are part of the matching method, and
- forming (S400) a similarity matrix (300) having similarity elements (310) from the results of the comparison; wherein the similarity values are summed over the image excerpt (10) and are stored in the similarity matrix (300) having similarity elements (310), wherein the similarity matrix (300) constitutes an intermediate step of the matching method,
- evaluating (S500) the similarity matrix (300) in an evaluation unit (7) by means of an evaluation function along a path which includes a plurality of similarity elements (310), wherein the evaluation function calculates the positive differences of neighbouring similarity elements (310) and sums them, wherein the sum formed thereby is a measure (400) of the ambiguity present in the matrix (100), and
- generating (S600) an evaluation result as a measure of an ambiguity present in the matrix (100) of the first 2D structure, wherein, if the evaluation result indicates with respect to a region as an ambiguity measure a period or an edge in the first camera image or the matrix (100), the optical flow vector in this region is discarded.

2. Method according to Claim 1, **characterized in that** the comparison algorithm is applied to a plurality of matrix elements (110) in order to compare the matrix (100) with the comparison matrix (200).

3. Method according to either of the preceding claims, **characterized in that** the evaluation result adopts an extreme value if no ambiguities are present in the matrix (100) .

4. Method according to any of the preceding claims, **characterized in that** the path over a plurality of similarity elements (310) on which the evaluation function is executed is a closed path.

5. Method according to any of the preceding claims, **characterized in that** the similarity matrix (300) is square.

6. Method according to any of the preceding claims, **characterized in that** the path runs along the edge of the similarity matrix (300) and only the similarity elements (310) which map the edge of the similarity matrix (300) are formed, preferably only the similarity values (310) in the topmost and bottommost rows of the similarity matrix (300) and in the right and left columns of the similarity matrix (300) are used.

7. Method according to any of the preceding claims, **characterized in that** the evaluation result of the similarity matrix (300) is quantized into value ranges, such that the values of the evaluation result are assigned to the value ranges and the value ranges are assigned to a measure of the ambiguity.

8. Method according to any of the preceding claims, **characterized in that** the first 2D structure and the second 2D structure are scalable and for each scaled first and second 2D structure for each structure element of the first 2D structure the matrix (100) and comparison matrix (200) are compared and a similarity matrix (300) having similarity elements (310) is created and evaluated and an evaluation result is in each case generated in order to create a measure of an ambiguity for each scaled first 2D structure.

9. Method according to the preceding claim, **characterized in that** the evaluation results as a measure of an ambiguity for each scaled first 2D structure are fused and the fused evaluation results are assessed or evaluated in order to form a fusion measure of an ambiguity for the unsealed first 2D structure or for a scaled first 2D structure and in order to enable further processing of the fusion measure.

10. Device for detecting ambiguities in a matrix (100), in particular a chip or an ASIC, comprising:
a first processing unit (4) for providing a matrix (100) from a first 2D structure from sensor data of a camera sensor (2);
a second processing unit (5) for providing a comparison matrix (200) of a second 2D structure from sensor data of a camera sensor;
a comparator unit (6) having a comparison algorithm for comparing and forming a similarity matrix (300);
**characterized by**
an evaluation unit (7) for executing an evaluation function along a path which includes a plurality of similarity elements (310) of the similarity matrix (300), and for generating an evaluation result as a measure of an ambiguity present in the first 2D structure, wherein
the device is configured to carry out a method according to any of the preceding Claims 1 to **error! reference source could not be found.,** and
the first processing unit (4) and/or the second processing unit (5) and/or the comparator unit (6) and/or the evaluation unit (7) are/is implemented in a chip or an ASIC, and
the first 2D structure is an image and the second 2D structure is an image from which a comparison image is determined.

## Revendications

1. Procédé de détection automatique d'ambiguïtés dans une matrice d'une première structure 2D pour un procédé d'appariement destiné à déterminer le flux optique, afin d'estimer ou de détecter le mouvement de pixels, comprenant les étapes suivantes :
- fourniture (S100) d'une matrice (100) d'une première structure 2D ayant des éléments de matrice (110) au moyen d'une première unité de traitement (4), la première structure 2D étant une image qui est fournie par un capteur de caméra (2), et la matrice (100) étant une section d'image (10) de la première structure 2D, l'élément de matrice (110) correspondant à un pixel et à sa position dans une section d'image (10) et la valeur de l'élément de matrice (110) représentant une caractéristique du pixel, une telle caractéristique étant un niveau de gris ou une valeur de couleur ou une valeur plus complexe qui peut comprendre l'environnement d'un pixel et/ou des relations de voisinage avec d'autres pixels ;
- fourniture (S200) d'une matrice comparative (200) d'une deuxième structure 2D ayant des éléments de matrice comparatifs (210) au moyen d'une deuxième unité de traitement (5), la matrice comparative (200) étant une image comparative (20) issue de la deuxième structure 2D, cette deuxième structure 2D étant également une image du capteur de caméra (2), et l'image comparative étant égale à ou plus grande que la section d'image (10), la matrice comparative (200) correspondant à une région d'image déterminée à un autre moment que l'image de la première structure 2D ;
- comparaison (S300) de la matrice (100) avec la matrice comparative (200) au moyen d'un algorithme de comparaison dans une unité de comparaison (6) ; la section d'image (10) à comparer et l'image comparative (20) étant respectivement transformées pixel par pixel avec un descripteur binaire, l'algorithme de comparaison étant une fonction de distance de Hamming, qui représente pixel par pixel les distances des descripteurs binaires sur des valeurs de similarité scalaires, les étapes (S100 à S300) faisant partie du procédé d'appariement, et
- formation (S400) d'une matrice de similarité (300) avec des éléments de similarité (310) issus des résultats de la comparaison ; les valeurs de similarité sur la section d'image (10) étant totalisées et la matrice de similarité (300) avec des éléments de similarité (310) étant mémorisée, la matrice de similarité (300) représentant une étape intermédiaire du procédé d'appariement,
- interprétation (S500) de la matrice de similarité (300) dans une unité d'interprétation (7) au moyen d'une fonction d'interprétation le long d'un chemin, lequel inclut une pluralité d'éléments de similarité (310), la fonction d'interprétation calculant les différences positives d'éléments de similarité (310) voisins et les totalisant, la somme ainsi formée étant une mesure (400) de l'ambiguïté présente dans la matrice (100), et
- génération (S600) d'un résultat d'interprétation en tant que mesure d'une ambiguïté présente dans la matrice (100) de la première structure 2D, le vecteur de flux optique étant rejeté dans une zone lorsque le résultat de l'interprétation à propos de cette zone indique une période ou une arête dans la première image de caméra ou la matrice (100) en tant que mesure d'ambiguïté.

2. Procédé selon la revendication 1, **caractérisé en ce que** l'algorithme de comparaison est appliqué sur une pluralité d'éléments de matrice (110) afin de comparer la matrice (100) avec la matrice comparative (200).

3. Procédé selon l'une des revendications précédentes, **caractérisé en ce que** le résultat d'interprétation adopte une valeur extrême lorsqu'aucune ambiguïté n'est présente dans la matrice (100).

4. Procédé selon l'une des revendications précédentes, **caractérisé en ce que** le chemin par le biais de plusieurs éléments de similarité (310) le long duquel est exécutée la fonction d'interprétation est un chemin fermé.

5. Procédé selon l'une des revendications précédentes, **caractérisé en ce que** la matrice de similarité (300) est quadratique.

6. Procédé selon l'une des revendications précédentes, **caractérisé en ce que** le chemin suit un tracé le long du bord de la matrice de similarité (300) et seuls sont formés les éléments de similarité (310) qui représentent le bord de la matrice de similarité (300), de préférence seules sont utilisées les valeurs de similarité (310) dans la ligne la plus haute et la ligne la plus basse de la matrice de similarité (300) et dans la colonne de droite et la colonne de gauche de la matrice de similarité (300).

7. Procédé selon l'une des revendications précédentes, **caractérisé en ce que** le résultat d'interprétation de la matrice de similarité (300) est quantifié en plages de valeurs, de sorte que les valeurs du résultat d'interprétation sont associées aux plages de valeurs et les plages de valeurs sont associées à une mesure de l'ambiguïté.

8. Procédé selon l'une des revendications précédentes, **caractérisé en ce que** la première structure 2D et la deuxième structure 2D sont évolutives et, pour chaque première et deuxième structure 2D ayant évolué, pour chaque élément de structure de la première structure 2D, la matrice (100) et la matrice comparative (200) sont comparées et une matrice de similarité (300) avec des éléments de similarité (310) est créée et interprétée et un résultat d'interprétation est respectivement généré afin de créer une mesure d'une ambiguïté pour chaque première structure 2D ayant évolué.

9. Procédé selon la revendication précédente, **caractérisé en ce que** les résultats d'interprétation en tant que mesure d'une ambiguïté sont fusionnés pour chaque première structure 2D ayant évolué et les résultats d'interprétation fusionnés sont évalués ou interprétés afin de former une mesure de fusion d'une ambiguïté pour la première structure 2D n'ayant pas évolué ou pour une première structure 2D ayant évolué et en vue de permettre un post-traitement de la mesure de fusion.

10. Dispositif de détection automatique d'ambiguïtés dans une matrice (100), notamment une puce ou un ASIC, comprenant
une première unité de traitement (4) destinée à fournir une matrice (100) à partir d'une première structure 2D à partir de données de capteur d'un capteur de caméra (2) ;
une deuxième unité de traitement (5) destinée à fournir une matrice comparative (200) d'une deuxième structure 2D à partir des données de capteur d'un capteur de caméra ;
une unité de comparaison (6) comprenant un algorithme de comparaison servant à la comparaison et à la formation d'une matrice de similarité (300) ; **caractérisé par**
une unité d'interprétation (7) destinée à exécuter une fonction d'interprétation le long d'un chemin qui inclut une pluralité d'éléments de similarité (310) de la matrice de similarité (300) et à générer un résultat d'interprétation en tant que mesure d'une ambiguïté présente dans la première structure 2D,
le dispositif étant conçu pour mettre en œuvre un procédé selon l'une des revendications précédentes 1 à **erreur ! Source du renvoi introuvable.,** et
la première unité de traitement (4) et/ou la deuxième unité de traitement et/ou l'unité de comparaison (6) et/ou l'unité d'interprétation (7) étant mise(s) en œuvre dans une puce ou un ASIC, et
la première structure 2D étant une image et la deuxième structure 2D étant une image à partir de laquelle est déterminée une image comparative.
